# EUROPEAN PATENT APPLICATION

(11) **EP 0 564 653 A1**
(43) Date of publication of application: **13.10.1993**
(21) Application number: 92920366.9
(22) Date of filing: 25.09.1992
(51) Int. Cl.: C09K 5/04, F25B 1/00, C07C 19/08

(54) **FLUOROALKANE MIXTURE**

(30) Priority: 26.09.1991 JP 247777/91
(71) Applicant: DAIKIN INDUSTRIES, LTD., Kita-ku, Osaka 530 (JP)
(72) Inventor: OMURE, Yukio Yodogawa Seisakusho Daikinkogyo, Settsu-shi Osaka 566 (JP); NOGUCHI, Masahiro Yodogawa Seisakusho Daikinkogyo, Settsu-shi Osaka 566 (JP); FUJIWARA, Katsuki Yodogawa Seisakusho Daikinkogyo, Settsu-shi Osaka 566 (JP); MOMOTA, Hiroshi Yodogawa Seisakusho Daikinkogyo, Settsu-shi Osaka 566 (JP)
(74) Representative: Schüler, Horst, Dr.
(86) International application number: JP9201218
(87) International publication number: WO9306188

(57) **Abstract**

A mixture of difluoromethane with octafluoropropane, and a refrigerator using a refrigerant comprising said mixture.

## Description

### Technical Field

The present invention relates to a fluoroalkane composition which is of use as a refrigerant, among others.

### Background Art

As the working fluid or refrigerant, chlorofluoroalkanes, azeotropic mixtures thereof, and compositions analogous thereto are known. Among them, CFC11(trichlorofluoromethane), CFC12(dichlorodifluoromethane), CFC114(1,2-dichlorol-1,1,2,2-tetrafluoroethane) and HCFC22(chlorodifluoromethane) have been used most commonly as refrigerator working fluids.

However, once released into the atmosphere, these chlorofluoroalkanes ascend to the stratosphere in intact form because of their stability against decomposition and generate Cℓ radicals there to destroy the ozone layer of the stratosphere to inflict serious damages on the earth ecology including man. Therefore, the use and production of these ozone-malignant chlorofluoroalkanes have come to be restricted by international conventions.

Among the chlorofluoroalkanes subject to control are CFC11, CFC12 and CFC114. Of the above chloro fluoroalkanes, HCFC22 is currently not subject to control because of its fairly low ozone depleting potential (hereinafter referred to briefly as ODP) in comparison with the controlled substances mentioned above (e.g. about 1/20 compared with CFC11) but it is generally expected that this compound, too, will be ultimately replaced with compounds having an ODP value of zero.

With the popular use of air conditioning-refrigeration equipment, any restriction on the use and production of the refrigerant, the demand for which is increasing year by year, would have significant impacts on all the existing social mechanisms inclusive of various ecosystems and those for the storage and transportation of food. Therefore, a true and urgent need is being felt for the development of new refrigerants having no risk or only a drastically reduced risk for causing the above-mentioned problem of ozone depletion.

As compounds promising to be useful substitutes for the above-mentioned chlorofluoroalkanes (hereinafter referred to as candidate substitute compounds), there are known several hydrogen-containing chlorofluoroalkanes and fluoroalkanes, such as HFC21 (dichloromonofluoromethane), HFC23(trifluoromethane), HFC32(difluoromethane), HFC 124 (monochlorotetrafluoromethane), HFC125(pentafluoroethane), HCFC133a (monochlorotrifluoroethane), HFC134a (tetrafluoroethane), HCFC142b(monochlorodifluoroethane) and HFC143a(trifluoroethane).

However, none of these candidate substitute compounds can independently satisfy all the performance requirements of a refrigerant, in terms of ODP, non-flammability and so on.

Therefore, it might be contemplated with reason to use two or more of them in combination. However, when an uncosidered simple mixture of them is used as the refrigerant, a change in composition due to change of phase, i.e. evaporation and condensation, in the heat exchanger is unavoidable so that the operation reliability of the refrigeration equipment cannot be insured.

For example, JP Kokai H-93889 discloses a refrigerant composed of FC218 alone and EPA-427604 discloses an azeotropic mixture of FC218 and HFC134. However, both have the disadvantage of inadequate refrigerating capacity.

The specification of US Patent 4,978,467 discloses a binary system of HFC32 and HFC125. However, compared with HCFC22 which has heretofore been used prevalently as the refrigerant, this system has only a low coefficient of performance which requires improvement.

Aside from the above systems, the following azeotropic systems are known.

R500 ... CFC12/HFC152a = 78.3/26.2 weight %
R502 ... HCFC22/CFC115 = 48.8/51.2 weight %
R503 ... CFC13/HFC23 = 59.9/40.1 weight %
R504 ... HFC32/CFC115 = 48.2/51.8 weight %
However, since they contain chlorine, the trend is that the use of these refrigerants will also be restricted in not a too distant future.

### Disclosure of Invention

The primary object of the present invention is to provide a refrigerant composition featuring an ODP value of zero, yet having excellent refrigerating properties and being substantially free of the above-mentioned change in composition associated with a change of phase in the running of machinery.

The inventor of the present invention has been engaged in intensive research with the eye set on the foregoing state of the art. As a result, the inventor discovered that a mixture of difluoromethane and octafluoropropane has qualities required to accomplish the above-mentioned object.

The present invention, thus, provides the follow ing compositions.
1. A composition comprising difluoromethane and octafluoropropane.
2. The composition mentioned in paragraph 1 comprising a mixture of 5 to 95 mole % of difluoromethane and 95 to 5 mole % of octafluoropropane.
3. An azeotrope-like composition as mentioned in paragraph 2 comprising a mixture of 5 to 78.5 mole % of difluoromethane and 95 to 21.5 mole % of octafluoropropane.
4. An azeotrope-like composition as mentioned in paragraph 3 comprising a mixture of 70 to 73 mole % of difluoromethane and 30 to 27 mole % of difluoropropane.

Since, for all practical purposes, an azeotrope-like composition can be dealt with in the same manner as an azeotropic mixture, any azeotrope is mentioned as an azeotrope-like composition in this specification.

The main physical properties of difluoromethane (hereinafter referred to as HFC32) and octafluoropropane (hereinafter referred to as FC218), which are used in the present invention, and the main physical properties of the minimum-boiling azeotropic mixture of the two compounds are presented below in Table 1.

**Table 1**

| | HFC-32 | FC-218 | HFC-32/FC-218 |
|---|---|---|---|
| Fractional composition (mole %) | - | - | 70.5/29.5 |
| Molecular weight | 52 | 188 | 92 |
| Boiling point (°C) | -51.8 | -37.7 | -62.5 |
| Critical temperature (°C) | 78.4 | 71.9 | 61.5 |
| Liquid density (g/cc:0°C) | 1.05 | 1.45 | 1.30 |
| Ozone depleting potential | 0 | 0 | 0 |

The composition of the present invention is generally provided in an HFC32:FC218 ratio of 5 through 95:95 through 5 (mole % ratio). In the case of a composition containing less than 5 mole % of HFC32, the characteristically high refrigerating capacity and efficiency of HFC32 will not be fully exploited. On the other hand, if the proportion of HFC32 exceeds 95 mole %, the temperature of compressor discharge gas will be too high.

The preferred HFC32:FC218 ratio of the composition of the present invention is 5 through 78.5:95 through 21.5 (mole %). It has been found that mixtures within this range are nonflammable.

The more advantageous HFC32:FC218 ratio for the composition of the invention is 70 through 73:30 through 27 (mole %). This composition exhibits still superior properties as an azeotrope-like mixture and as such is very useful for all practical purposes.

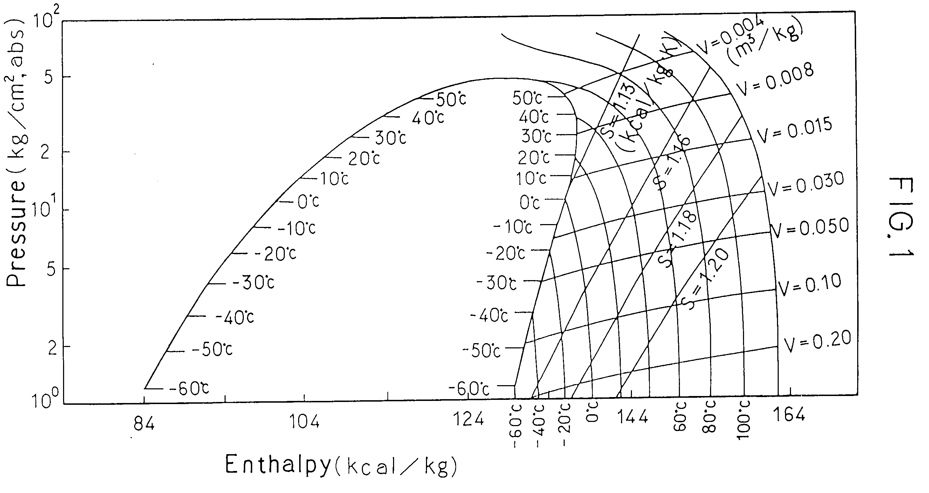

Fig. 1 is a pressure-enthalpy diagram of the azeotropic mixture consisting of HFC32:FC218=70.5:29.5 (mole % ratio). The refrigerant which circulates in a refrigerating machine can be represented using Fig. 1. As can be understood from Fig. 1, the gradient of the constant entropy line is close to that of the saturated vapor line, indicating that this azeotropic mixture does not involve any appreciable rise of discharge gas temperature in the compression stage so that it has very desirable refrigerant characteristics.

Where necessary, stabilizers can be incorporated in the composition of the invention. Thus, where a high degree of stability is required for rugged conditions of service, the following and other stabilizers can be added in a proportion of about 0.01 to 5% of the weight of the mixture; viz. epoxides such as propylene oxide, 1,2-butylene oxide, glycidol, etc., phosphites such as dimethyl phosphite, diisopropyl phosphite, diphenyl phosphite, etc., thiophosphites such as trilauryl trithiophosphite etc., phosphine sulfides such as triphenoxyphosphine sulfide, trimethylphosphine sulfide, etc., boron compounds such as boric acid, triethyl borate, triphenyl borate, phenylboric acid, diphenylboric acid, etc., phenols such as 2,6-di-tert-butyl-p-cresol etc., nitroalkanes such as nitromethane, nitroethane, etc., acrylic acid esters such as methyl acrylate, ethyl acrylate, etc., dioxane, tert-butanol, pentaerythritol, p-isopropenyltoluene and so on.

Furthermore, within the range not affecting the object and effects of the present invention, other compounds can be added to the mixture of the invention. Among such other compounds can be reckoned ethers such as dimethyl ether, pentafluorodimethylether, etc., amines such as perfluoroethylamine etc., and LPG.

### Effects of Invention

The composition of the invention is easily decomposed and does not contain chlorine atom which might affect the ozone layer so that it has no ozone depleting potential, viz. ODP=zero.

The composition of the invention insures a high refrigerating capacity with a comparatively high coefficient of performance. For example, an azeotrope of HFC32:FC218=70.5:29.5 (mole %) has a refrigerating capacity equal to 1.5 times that of HCFC22 and a coefficient of performance equal to 84% relative to HCFC22, thus being a useful refrigerant as a whole.

The azeotrope offers advantages in liquid control and recovery-reuse.

The composition of the present invention is only sparingly solubilizing high molecular compounds, so that the existing refrigerators can be used as they are without need for change in the structural materials.

Except at high concentrations of FC218, the composition is highly compatible with PAG(polyalkylene glycol) oils, polyester oils and other refrigerating machine oils.

The composition of the invention is not only nonflammable but also excellent in thermal stability.

The composition of the invention is not only of use as a refrigerant but can be used with advantage as a propellant, a blowing agent for the production of foamed articles of polyolefins such as polyethylene, polypropylene, polystyrene, etc. or polyurethane foams or as a working fluid for reclaiming waste heat from low-temperature heat sources.

### Brief Description of the Drawings

Fig. 1 is a pressure-enthalpy diagram of the azeotropic mixture composed of HFC32:FC218=70.5:29.5 (mole % ratio) according to the invention.

Fig. 2 is a graph showing that the HFC32-FC218 mixture according to the invention has an azeotrope-like characteristic.

Fig. 3 is a graph showing the flammability zone of the HFC32-FC218 mixture according to the invention.

### Best Mode for Practicing the Invention

The following examples and comparative examples are intended to point out the characteristic features of the invention with further clarity.

### Example 1

For a mixture of HFC32 and FC218, the relative amounts of the respective components in the vapor phase and liquid phase at equilibrium at 0°C were determined as follows. Thus, a sample of the mixture was sealed in a pressure-resistant container and using a circulating pump, the sample was sufficiently agitated for transition from vapor phase to liquid phase and from liquid phase to vapor phase. The composition of the vapor phase and of the liquid phase was analyzed by gas chromatography and, at the same time, the corresponding pressure was determined.

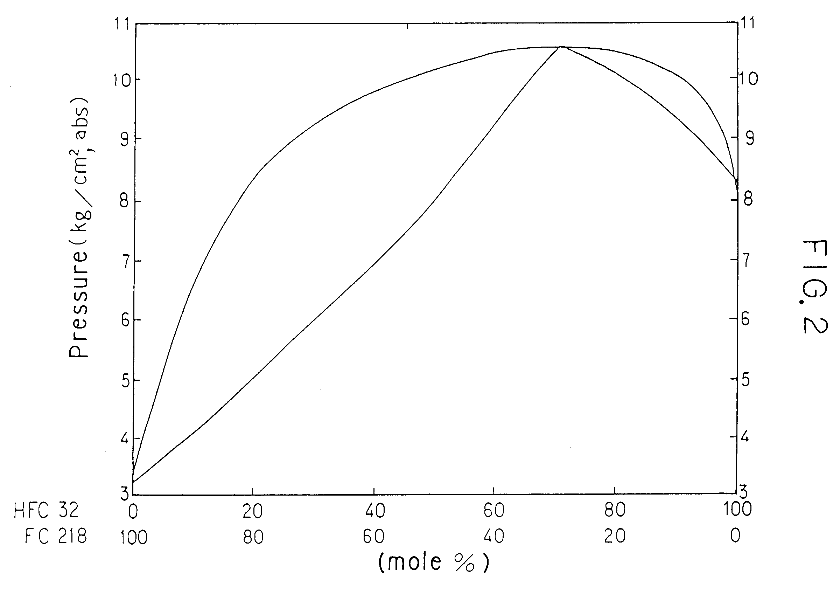

The results are shown in Fig. 2. It can be seen that the vapor phase and liquid phase were substantially identical in composition within the range of 70-73 mole % HFC32 and 30-27 mole % FC218 and that the minimum boiling azeotrope occurred at about 70.5 mole % HFC32 and about 29.5 mole % FC218.

### Example 2

Using a mixture of HFC32 and FC218 as the mixed refrigerant, a 1-HP refrigerator was operated at the condenser vaporization temperature of 5°C and condensation temperature of 40°C, the compressor inlet super-heating temperature of 5°C and the condenser exit supercooling temperature of 0°C. The difference in composition between the vapor and liquid phases was determined by gas chromatography using samples of the vapor and liquid phases of the refrigerant in the condenser.

As the refrigerating machine oil, polyalkylene glycol was used.

Table 2 sets forth the fractional composition (mole %), coefficient of performance (COP), refrigerating capacity [kcal/m³], compressor gas discharge temperature (°C) and vapor-liquid composition difference (mole %). The composition of 70.5 mole % HFC32 and 29.5 mole % FC218 is the azeotrope described in Example 1.

Reference data on HCFC22 are also presented in Table 2.

It should be understood that A represents HFC-32 and B represents FC218.

**Table 2**

| Fractional composition (mole %) | | COP | Refrigerating capacity (kcal/m³) | Compressor gas discharge temperature (°C) | Gas-liquid composition difference (mole %) |
|---|---|---|---|---|---|
| A | B | | | | |
| 0.0 | 100.0 | 5.50 | 590 | 40.0 | 0 |
| 20.0 | 80.0 | 5.50 | 810 | 44.1 | 0.34 |
| 40.0 | 60.0 | 5.51 | 1060 | 47.6 | 0.21 |
| 60.0 | 40.0 | 5.52 | 1290 | 50.3 | 0.09 |
| 70.0 | 30.0 | 5.56 | 1400 | 52.9 | 0.01 |
| 70.5 | 29.5 | 5.58 | 1400 | 53.8 | 0 |
| 73.0 | 27.0 | 5.62 | 1420 | 56.2 | 0.02 |
| 80.0 | 20.0 | 5.88 | 1440 | 60.4 | 0.10 |
| 90.0 | 10.0 | 5.97 | 1450 | 68.3 | 0.05 |
| 100.0 | 0 | 6.31 | 1490 | 75.0 | 0 |
| (HCFC22) | | 6.61 | 940 | 60.1 | 0 |

It will be apparent from Table 2 that the refrigerant according to the present invention is particularly excellent in refrigerating capacity and, moreover, is well-balanced in characteristics as a whole.

### Reference Example 1

The flammability zone of the HFC32-FC218 mixture was determined by the flammable limit test directed in Article 2-1 a and b of the General Pressurized Gas safety Regulation in accordance with the procedure described in Article 2 of the Container Safety Regulation.

Thus, a spherical container of about 2 liters capacity was charged with HFC32 and FC218 together in metered amounts by means of a manometer and after a steady state of composition was established, a spark was produced with an ignition device to see whether the composition would be ignited.

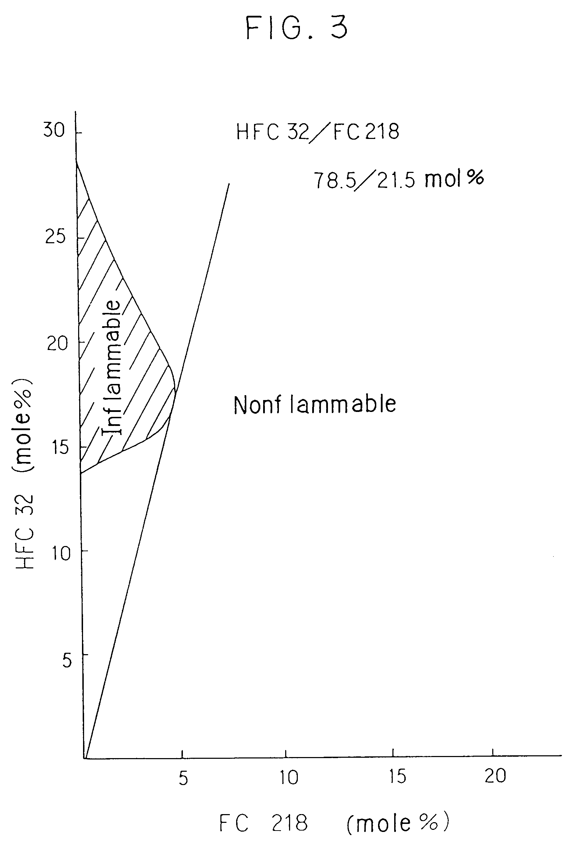

The results are shown in Fig. 3. In Fig. 3, the vertical axis represents the proportion of HFC32 (mole %). In any case, the balance is air.

The shaded area of Fig. 3 represents the inflammability zone. In the area under the oblique line extending to the upper right, the mixture is not inflammable without regard to composition. The gradient of this straight line represents the ratio of the two components and indicates that the mixture is nonflammable in the range of less than 78.5 mole % of HFC32 and more than 21.5 mole % of FC218.

## Claims

1. A composition comprising difluoromethane and octafluoropropane.

2. The composition of claim 1 comprising a mixture of 5 to 95 mole % of difluoromethane and 95 to 5 mole % of octafluoropropane.

3. The composition of claim 2 comprising a mixture of 5 to 78.5 mole % of difluoromethane and 95 to 21.5 mole % of octafluoropropane.

4. The azeotrope-like composition of claim 3 comprising a mixture of 70 to 73 mole % of difluoromethane and 30 to 27 mole % of octafluoropropane.

5. A refrigerating machine using a composition comprising difluoromethane and octafluoropropane as the refrigerant.

6. The refrigerating machine of claim 5 employing a refrigerant composition comprising a mixture of 5 to 95 mole % of difluoromethane and 95 to 5 mole % of octafluoropropane.

7. The refrigerating machine of claim 6 employing a composition comprising a mixture of 5 to 78.5 mole % of difluoromethane and 95 to 21.5 mole % of octafluoropropane.

8. The refrigerating machine of claim 7 employing an azeotrope-like composition comprising a mixture of 70 to 73 mole % of difluoromethane and 30 to 27 mole % of octafluoropropane.
